# DEMANDE DE BREVET EUROPEEN

(11) **EP 0 920 965 A1**
(43) Date de publication de la demande: **09.06.1999**
(21) Numéro de dépôt: 98403019.7
(22) Date de dépôt: 02.12.1998
(51) Int. Cl.: B27G 21/00, B23Q 3/00

(54) **Dispositif d'immobilisation d'un protecteur de toupie, ensemble et machine**

(30) Priorité: 03.12.1997 FR 9715234
(71) Demandeur: MATERIEL ET OUTILLAGE RATIONNELS POUR L'INDUSTRIE (Société Anonyme), 91670 Angerville (FR)
(72) Inventeur: Fourcault, Serge, 91410 Dourdan (FR)
(74) Mandataire: Derambure, Christian

(57) **Abrégé**

L'invention concerne notamment un dispositif d'immobilisation d'un protecteur (1) de toupie sur un boîtier (2) solidaire d'une machine d'usinage. Le dispositif comprend une glissière comprenant un moyen (30) de guidage mâle et un moyen (31) de guidage femelle complémentaire, qui sont montés à coulissement réciproque selon une trajectoire de réglage et sont destinés à être rigidement fixés au protecteur (1) ou à la machine, et des moyens (55) d'immobilisation réciproque des moyens de guidage mâle et femelle (30, 31).

## Description

L'invention concerne un dispositif de guidage et d'immobilisation d'un protecteur d'outil tel que toupie, un ensemble et/ou une machine d'usinage par exemple de bois, équipés de ce dispositif.

L'invention concerne donc le domaine technique des machines permettant des usinages de forme de pièces de bois.

De telles machines sont appelées toupies ou fraiseuses, et comportent un outil tournant de forme, émergeant au-dessus d'une table horizontale. L'outil est formé soit par un fer droit, soit par un outil à profil constant tel qu'une molette, une fraise, un disque à couteaux amovibles, un porte-outils à coquilles.

Usuellement, la pièce de bois à usiner est placée sur la table horizontale de la machine. La pièce est alors déplacée par l'utilisateur contre la table pour venir en contact avec l'outil, suivant une trajectoire d'avance.

Le protecteur est destiné à protéger l'utilisateur lors de l'usinage.

Pour guider la pièce par rapport à l'outil et donner à celui-ci la profondeur de passe choisie, il est connu d'utiliser un guide, également appelé lunette et faisant partie du protecteur de toupie. L'opérateur règle la position du guide en fonction de l'épaisseur de la pièce à usiner et de la profondeur de passe choisie.

Le document EP-A-504.375 décrit un protecteur d'outil monté sur une paire de colonnes verticales fixées à la table de travail. Ce protecteur comporte une paire d'anneaux formant un assemblage dit poupée, fixé aux colonnes par une paire de pièces montées glissantes sur deux barres saillantes solidaires de la poupée fixe. Ces deux pièces sont munies d'autres pièces complémentaires, qui permettent de déplacer l'assemblage par rapport à la fraise, afin de régler la profondeur de passe de celle-ci.

Le document FR-A-2.711.571 décrit également un organe de fixation amovible d'une branche de guide sur deux glissières. Cet organe de fixation comprend une boîte fixée au guide et comportant deux griffes de blocage en forme de S. Un côté de la boîte peut être engagé entre les deux glissières, de sorte que les griffes soient placées respectivement en regard des glissières.

Le document DE-A-3 407 243 décrit un dispositif de protection comportant un protecteur fixé à une pièce formant glissière.

Citons aussi d'autres documents du même domaine technique: WO-A-9305937, DE-A-3931141, US-A-926058, US-A-392563.

Les dispositifs d'immobilisation connus présentent des inconvénients.

Notamment, le réglage du protecteur sur les colonnes ou glissières est imprécis.

Par ailleurs, le montage et le démontage du protecteur prennent un temps considérable, notamment lors d'un changement de guide.

De manière similaire, il est exigé que ces montage et démontage puissent être effectués sans outillage tel que clé.

L'invention vise à résoudre ces inconvénients, notamment.

A cet effet, un premier objet de l'invention est un dispositif de guidage et d'immobilisation d'un protecteur d'outil de forme tel que de toupie, sur une machine d'usinage par exemple de pièces de bois.

Le dispositif comporte une glissière comprenant un moyen de guidage mâle et un moyen de guidage femelle complémentaire, qui sont montés à coulissement réciproque selon une trajectoire de réglage , et des moyens d'immobilisation réciproque des moyens de guidage mâle et femelle.

L'organe mâle est destiné à être rigidement fixé au protecteur, tandis que l'organe femelle est destiné à l'être à la machine, ou inversement.

Selon l'invention définie dans les revendications, le dispositif comporte un seul moyen de guidage mâle et un seul moyen de guidage femelle.

Un deuxième objet de l'invention est un ensemble destiné à une machine d'usinage par exemple de pièces de bois, équipé d'un dispositif tel qu'évoqué plus haut, et défini dans les revendications.

Un troisième objet de l'invention est une machine d'usinage, par exemple de pièces de bois, équipée d'un dispositif et/ou d'un ensemble tels qu'évoqués plus haut, et défini dans les revendications.

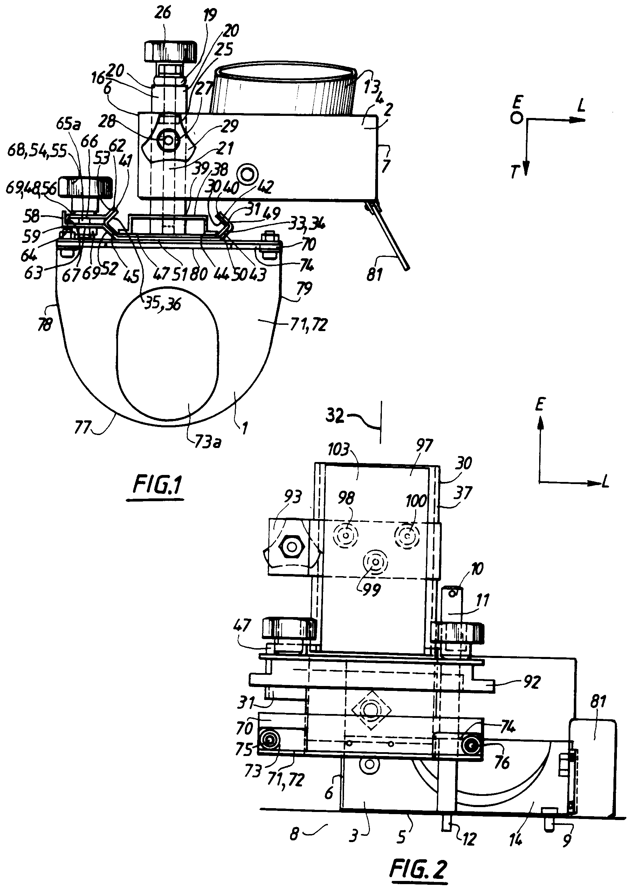

L'invention sera mieux comprise à la lecture de la description détaillée qui suit, donnée uniquement à titre d'exemple, et faisant référence aux dessins.
Dans ces dessins, la figure 1 représente, vu de dessus, un protecteur, qui comprend une lunette ou guide et qui est immobilisé par le dispositif suivant l'invention par rapport à un boîtier destiné à être fixé à une machine d'usinage, non représentée.
La figure 2 représente, vus de face, le dispositif d'immobilisation suivant l'invention, le protecteur et le boîtier.
La figure 3 représente, vus de côté, le dispositif d'immobilisation suivant l'invention, le protecteur et le boîtier.
La figure 4 représente, vus de dessus, le dispositif d'immobilisation suivant l'invention, le boîtier et le protecteur, sur lequel est fixée une rampe de guidage.
La figure 5 est une vue d'élévation latérale d'un capôt ou 〈〈 patin 〉〉 en polycarbonate transparent, réalisé par moulage-injection en une seule pièce.
La figure 6 est une vue d'élévation transversale du capôt de la figure 5.
La figure 7 est une vue en plan de dessus, du capôt des figures 5 et 6.
La figure 8 est une vue d'élévation latérale d'un support de coulise à profilé en alliage d'aluminium extrudé avec une section close hexagonale.
La figure 9 est une vue d'élévation transversale du support de la figure 8.
Et la figure 10 est une vue en plan de dessous, de ce support.

La desription est faite en référence à une toupie comme machine d'usinage.

Sur les figures, sont représentées des directions mutuellement orthogonales L, E et T.

La direction L dite longitudinale, et la direction T dite transversale, sont sensiblement horizontales. Tandis que la direction E dite d'élévation est sensiblement verticale.

L'invention est décrite ici en se reportant à ces directions L, E et T.

Les constituants de l'invention sont décrits dans leurs positions et orientations courantes d'utilisation. Mais il va de soi qu'ils peuvent prendre diverses positions ou orientations.

Tel est le cas notamment pour les constituants déplaçables ou mobiles.

Sur les figures, la référence numérique 1 désigne de manière générale un protecteur.

Dans les réalisations représentées, un boîtier 2 est de forme générale parallélépipédique.

Le boîtier 2 comporte une première plaque arrière 3 et, se raccordant à celle-ci une deuxième plaque supérieure 4, une troisième plaque inférieure 5 opposée à la deuxième plaque 4, une quatrième plaque latérale gauche 6 et, opposée à celle-ci, une cinquième plaque latérale droite 7.

Le boîtier 2 est disposé par sa plaque inférieure 5 sur une table 8 de travail immobilisée par rapport à la machine d'usinage.

Le boîtier 2 est immobilisé par rapport à la table 8 par une vis 9 et par une première barre 10.

La vis 9 est disposée de manière à traverser la plaque inférieure 5 à proximité de la plaque droite 7 et à être vissée dans un taraudage correspondant de la table.

La barre 10 comporte une première partie supérieure 11, qui traverse la plaque supérieure 4 et est appliquée contre la plaque inférieure 5 à distance de la vis 9 et parallélement à la plaque 7, et une deuxième partie inférieure 12.

La deuxième partie inférieure 12 est prolongée vers le bas la première partie 11 et est de section transversale plus petite que celle-ci.

La deuxième partie 12 est montée de manière à traverser un trou de section correspondante de la plaque inférieure 5, à pénétrer et à être fixée dans la table 8.

Une buse 13 d'aspiration des copeaux de bois éjectés par un outil de forme monté sur la broche de la toupie, non représenté, lors de l'usinage, est fixée sur la première plaque 3 du boîtier, sur les bords d'une première ouverture de celle-ci.

La buse 13 a une forme de cylindre circulaire dont les génératrices sont inclinées par rapport au plan de la plaque 3.

Les plaques 4, 5, 6 et 7 délimitent, à l'opposé de la plaque 3, une ouverture béante vers l'avant.

Une sixième plaque avant 15, obturant la moitié supérieure de l'ouverture 14 du boîtier 2, est fixée aux côtés inférieurs des plaques 4, 6 et 7.

Les plaques 3 à 7 et 15 sont formées ici de tôles métalliques planes.

La forme parallélépipédique du boîtier 2 est obtenue dans l'exemple illustré, par pliage et/ou découpage et/ou soudage de ces tôles.

Cette réalisation est donc particulièrement économique.

Un tube 16 de réglage est monté de manière à traverser une deuxième ouverture 17 ménagée dans la plaque arrière 3 du boîtier et une ouverture 18 ménagée dans la plaque avant 11. Les ouvertures 17 et 18 sont en vis-à-vis l'une de l'autre perpendiculairement aux plaques 3 et 11.

La surface extérieure du tube 16 et les ouvertures 17 et 18 sont de formes complémentaires.

Une traverse 19 ou étire de poussée, est fixée sur la partie extrême supérieure 20 du tube 16 par une première vis 21 allant de la partie extrême supérieure 20 du tube 16 à sa partie extrême inférieure 22.

La traverse 19 est immobilisée d'autre part par rapport à la plaque 3 par une deuxième vis 23, la traversant à distance de la première vis 21.

La deuxième vis 23 traverse une troisième ouverture 24 de la face 3, ménagée derrière la deuxième ouverture 17 et est vissée par un écrou 25 sous la plaque 3.

La deuxième vis 23 est sensiblement parallèle à la première vis 21.

La deuxième vis 23 est surmontée par une première poignée 26 et est solidaire de celle-ci.

Dans la plaque supérieure 4, un taraudage 27 est ménagé en vis-à-vis, suivant la direction E, du tube 16 de réglage.

Une troisième vis 28 est vissée au-dessus de la plaque 4 dans le taraudage 27 jusqu'à atteindre le tube 16 par son extrémité libre. La tête de la vis 28 est solidaire d'une deuxième poignée 29.

Les premières, deuxièmes et troisièmes vis 21, 23 et 28 sont destinées à immobiliser le tube 16 de réglage par rapport au boîtier 2.

Les poignées 26 et 29 sont destinées au réglage manuel de la position du tube 16.

Un moyen de guidage mâle 30 est fixé à la deuxième partie extrême 22 du tube 16, faisant saillie de la plaque avant 15 du boîtier.

Le moyen de guidage mâle 30 est destiné à coopérer avec un organe de guidage femelle 31 en coulissement suivant une trajectoire de réglage déterminée 32.

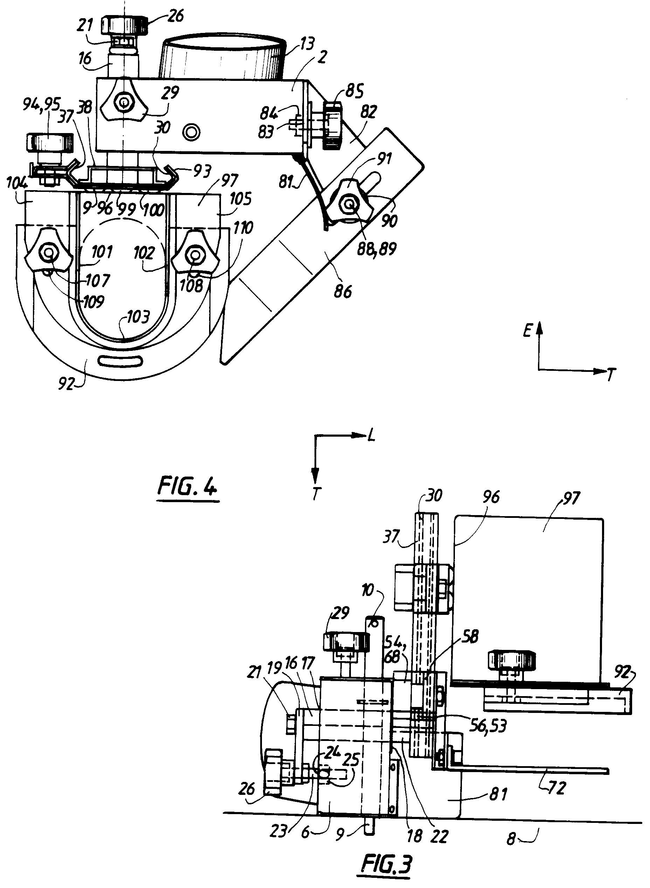

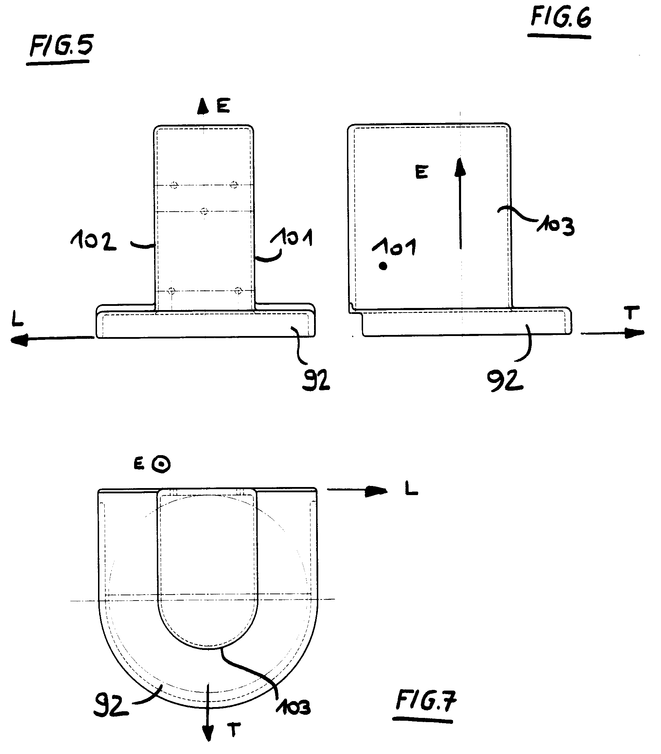

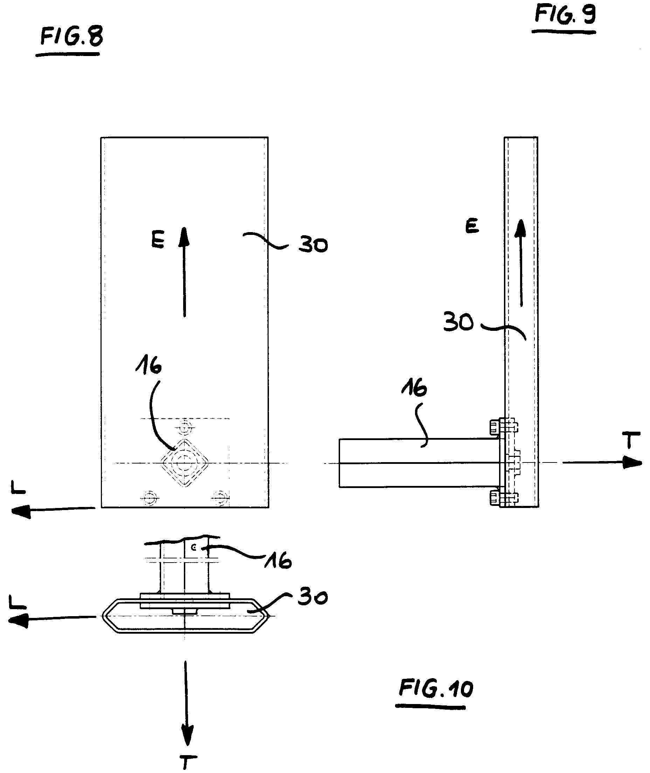

Dans la réalisation représentée sur les figures 1 à 4, les moyens de guidage mâle 30 et femelle 31 sont au moins en partie polygonaux à profil ouvert, transversalement à une direction donnée et la trajectoire de réglage 32 est rectiligne et parallèle à cette direction donnée.

Dans d'autres réalisations, non représentées, la trajectoire de réglage est courbe.

Dans la réalisation représentée sur les figures, cette trajectoire de réglage est parallèle à la direction E.

Reportons-nous ici au mode de réalisation des figures 8 à 10.

Les moyens de guidage mâle 30 sont un support de coulisse à profilé en alliage d'aluminium.

La section de ce profilé des moyens 30 est, contrairement au mode de réalisation des figures 1 à 4, close.

Cette section forme un hexagone, à angles arrondis.

Le profilé est réalisé par extrusion, et sectionné à la dimension d'élévation E nécessaire.

On voit sur la figure 8 que le tube 16 est ici à section polygonale, plus précisément sensiblement carrée, vu dans un plan perpendiculaire à la direction transversale T.

Dans d'autres réalisations, non représentées, la trajectoire de réglage est une autre direction de l'espace, par exemple parallèle au plan des directions T et L.

Dans les réalisations représentées, le moyen de guidage femelle 31 est fixé au protecteur 1.

Dans d'autres réalisations, non représentées, le moyen de guidage femelle 31 est fixé au tube 16 de réglage et le moyen de guidage mâle 30 est fixé au protecteur 1.

Selon l'invention, le dispositif de guidage et d'immobilisation du protecteur 1 comporte un seul moyen de guidage mâle 30 et un seul moyen de guidage femelle 31.

Le moyen de guidage mâle 30 et le moyen de guidage femelle 31 comportent chacun au moins une surface principale 33 respectivement 34, configurée pour empêcher à la fois leur rotation autour de la trajectoire 32 de réglage et leur séparation.

Les surfaces principales 33, 34 sont de forme complémentaire.

Le moyen de guidage mâle 30 et le moyen de guidage femelle 31 comportent chacun au moins une surface d'appui 35 respectivement 36, destinés à l'immobilisation réciproque des moyens de guidage 30 et 31.

Les surfaces d'appui 35, 36 sont de forme complémentaire.

La surface d'appui 35 et/ou 36 du moyen de guidage mâle 30 et/ou femelle 31 est en regard de la surface principale de ce même moyen.

Le plan tangent en au moins un point de la surface d'appui fait un angle aigu avec le plan tangent en au moins un point de la surface principale correspondante.

Dans la réalisation représentée, les surfaces principales 33, 34 et d'appui 35, 36 des moyens de guidage femelle et mâle 30, 31 ont une section, transversalement à la trajectoire de réglage, en queue d'aronde ou analogue.

Les surfaces principales 33, 34 et d'appui 35, 36 des organes de guidage femelle et mâle ont une section, transversalement à la trajectoire de réglage de la glissière, de forme polygonale.

Dans une autre réalisation, non représentée, les surfaces principale 33, 34 et d'appui 35, 36 des moyens de guidage femelle et mâle ont une section en ovale non circulaire, par exemple en ellipse, ou analogue.

Le moyen de guidage mâle 30 comprend une septième plaque 37, par exemple en tôle métallique, repliée vers l'arrière, le long d'arêtes rectilignes, parallèles à la direction E et fixée par un moyen approprié, par exemple par vissage, collage ou soudage, à la partie extrême inférieure 22 du tube 16.

Dans la réalisation représentée, la plaque 37 est repliée, sur chacun de ses côtés gauche et droite, suivant deux arêtes.

La plaque 37 occupe ainsi, vue suivant la direction E, cinq côtés d'un hexagone convexe, délimités par les arêtes rectilignes et les bords libres rectilignes de la plaque 37.

Dans d'autres réalisations, non représentées, la plaque 37 occupe, vue suivant la direction E, plusieurs côtés d'un autre polygone, par exemple d'un triangle, d'un quadrilatère, d'un pentagone, d'un heptagone, d'un octogone ou autres.

Dans d'autres réalisations, non représentées, le polygone, par exemple l'hexagone, est concave.

Dans d'autres réalisations, non représentées, la plaque 37 est repliée vers l'avant.

La plaque 37 est également fixée à la surface latérale du tube 16, proche de sa partie extrême inférieure 22, par une huitième plaque 38.

Cette plaque 38 comporte une ouverture 39, traversée par le tube 16 et par exemple de forme complémentaire de la section de celui-ci et est fixée d'autre part au côté de la plaque 37 tourné vers la plaque avant 15.

Dans la réalisation représentée, la plaque 37 comporte, de son bord libre 40 droite à son bord libre 41 gauche, du côté avant, une première petite face 42, une deuxième petite face 43, une grande face 44, une troisième petite face 45 et une quatrième petite face 46. La grande face 44 est sensiblement perpendiculaire au tube 16.

La plaque 38 est fixée à la plaque 37 en une partie de celle-ci opposée à la grande face 44.

Le moyen de guidage femelle 31 comprend une neuvième plaque 47 et une dixième plaque 48.

La plaque 47 est pliée, de la droite vers la gauche, en une première petite face 49, une deuxième petite face 50, une première grande face 51, une troisième petite face 52, qui sont reliées l'une à la suite de l'autre suivant des arêtes rectilignes de pliage, parallèles à la direction E et qui sont tournées respectivement vers les faces 42 à 45.

Les petites faces 42 et 43, 45 et 46, 49 et 50 font sensiblement un angle droit entre elles.

La grande face 44 respectivement 51 fait un angle sensiblement de 135° par rapport à chacune des deuxième et troisième faces adjacentes 43 et 45, respectivement 50 et 52.

La plaque 48 comporte une quatrième petite face 53, tournée vers la face 46.

La surface principale 33 du moyen de guidage mâle 30 comprend les faces 42 à 45 de la plaque 37.

La surface principale 34 du moyen de guidage femelle 31 comprend les faces 49 à 52 de la plaque 47.

La surface d'appui 35 du moyen de guidage mâle 30 comprend la face 46 de la plaque 37.

La surface d'appui 36 du moyen de guidage femelle 31 comprend la face 53 de la plaque 48.

La longueur, suivant la direction E, de la plaque 47 est supérieure à celle des plaques 37 et 48.

Les plaques 37, 38, 47 et 48 sont par exemple des tôles métalliques pliées.

La surface 36 d'appui est apte à être plaquée par des moyens 54 de sollicitation manuels contre la surface 35 d'appui complémentaire.

Cette surface 36 d'appui est déplaçable, par rapport à la surface principale 34 du moyen de guidage femelle 31, entre l'une et l'autre de positions d'immobilisation réciproque des moyens de guidage mâle et femelle et de coulissement réciproque de ceux-ci.

En position d'immobilisation, la surface d'appui 36 du moyen 31 de guidage femelle est plaquée contre celle complémentaire 35 du moyen 30 de guidage mâle, contraignant les surfaces principales 33, 34 à être également plaquées l'une à l'autre. Cet état est maintenu par des moyens 55 d'immobilisation.

En position de coulissement, les surfaces d'appui 35, 36 sont à distance l'une de l'autre, permettant un éloignement l'une de l'autre des surfaces principales 33, 34. L'utilisateur peut alors faire coulisser les moyens 30, 31 de guidage mâle et femelle l'un par rapport à l'autre le long de la trajectoire 32 de réglage.

Dans ce qui suit, la desription est faite en référence à la position d'immobilisation.

Le moyen 31 de guidage femelle comprend une première pièce 56 ayant un premier bord 57.

Le moyen 30 de guidage mâle comprend une deuxième pièce 58 ayant un profil 59 coudé destiné à recevoir le premier bord 57.

Les moyens 54 de sollicitation sont aptes à appliquer le bord 57 contre l'intérieur du profil 59 coudé pour guider en rotation la surface 36 d'appui du moyen 31 de guidage femelle autour du bord 57, lors du passage entre l'une et l'autre des positions de coulissement et d'immobilisation.

Les moyens 54 de sollicitation manuels et les moyens 55 d'immobilisation sont montés sur les première et deuxième pièces 56, 58.

La première pièce 56 comprend par exemple la plaque 48.

Cette plaque 48 a un profil 60 en zigzag, à trois première, deuxième et troisième branches 61, 62, 63.

Dans d'autres réalisations, non représentées, ce profil 60 est en U.

La première branche centrale 61 porte les moyens 54 de sollicitation manuels.

La deuxième branche 62, adjacente à la première 61, porte la face 53 et la surface 36 d'appui.

La troisième branche 63, adjacente à la première 61 et éloignée de la deuxième 62, porte le premier bord 57.

La deuxième pièce 58 comprend la plaque 47 ayant le profil coudé 59, comportant une quatrième branche 64 sensiblement en vis-à-vis de la première 61 et une cinquième branche 65, sensiblement en vis-à-vis de la troisième 63.

Dans la réalisation représentée, les deuxième et troisième branches 62, 63 font un angle obtus avec la première branche 61, par exemple respectivement de sensiblement 135° et de 90° à 120°.

La cinquième branche 65 fait sensiblement un angle droit avec la quatrième branche 64.

Les grandes faces 44 et 51 et les première et quatrième branches 61, 64 sont parallèles au plan des directions E et L. La cinquième branche 65 est parallèle au plan des directions E et T.

Dans d'autres réalisations, non représentées, les deuxième et/ou troisième branches 62, 63 font un angle aigu avec la première branche 61, et/ou la cinquième branche 65 fait un angle différent de 90° et de 0° avec la quatrième branche 64.

Les moyens 54 de sollicitation sont aptes à appliquer la troisième branche 63 contre la cinquième branche 65 pour les guider en translation l'un par rapport à l'autre, lors du passage entre l'une et l'autre des positions de coulissement et d'immobilisation.

Les moyens 54 de sollicitation manuels et les moyens 55 d'immobilisation comprennent une vis 65a de serrage l'une contre l'autre des première et deuxième pièces 56, 58.

La vis 65a traverse les première et deuxième pièces 56, 58 en des trous circulaires 66 et 67 de leurs première et quatrième branches 61, 64 et est solidaire d'une troisième poignée 68.

Les trous 66 et 67 sont face à face perpendiculairement au plan des branches 61 et 64 et coopèrent avec un écrou 69 fixé par exemple à la quatrième branche 64 sur son côté éloigné de la première branche 61.

Dans la réalisation représentée, la troisième et la cinquième branches sont rectilignes et parallèles entre elles, empêchant une rotation des première et deuxième pièces 56 et 58 l'une par rapport à l'autre autour de l'axe de la vis 65a, lorsque celle-ci est tournée par l'utilisateur par l'intermédiaire de la poignée 68.

Le protecteur 1 comporte un support 70 de lunette, par exemple une plaque plane, qui est fixé, par des moyens appropriés, par exemple par soudage ou rivetage, au côté, tourné vers l'avant, de la grande face 51 de la plaque 47.

Une lunette 71 est fixée au support 70.

Dans la réalisation représentée, la lunette 71 est fixée au support 70 par deux cornières.

Dans d'autres réalisations, non représentées, la lunette est fixée au support par une ou plus de deux cornières ou par d'autres moyens appropriés.

La lunette 71 comporte une onzième plaque 72 percée dans son plan d'un trou oblong 73a traversé par l'axe de l'outil monté sur la broche, non représentée, de la toupie.

La plaque 72 est par exemple une tôle métallique plane, par exemple en aluminium.

La lunette 71 est destinée au guidage d'une pièce, non représentée, à usiner par l'outil monté sur la broche de la toupie.

Dans la réalisation représentée, la plaque 72 est coudée sur sa partie arrière en deux cornières 73 et 74 coplanaires.

Les cornières sont par exemple obtenues par pliage de deux pattes prévues sur la partie arrière de la plaque 72. Ces deux pattes sont obtenues par exemple par découpage.

Les deux cornières 73 et 74 sont vissées respectivement par deux boulons 75 et 76 au support 70 de lunette.

La plaque 72 comporte, dans son plan, à sa périphérie, un bord courbe 77 avant, deux bords latéraux rectilignes 78 et 79 raccordés d'une part au bord courbe 77 et d'autre part aux coudes des cornières 73 et 74.

Ces deux coudes sont reliés entre eux par un bord droit arrière 80 de la plaque 72.

Dans la réalisation représentée, les cornières 73 et 74 sont coudées sensiblement à angle droit par rapport au plan de la plaque 72.

Dans d'autres réalisations, non représentées, les cornières 73 et 74 sont coudées suivant un angle différent de 90° par rapport au plan de la plaque 72.

Dans la réalisation représentée, le plan de la plaque 72 est paralléle aux directions T et L.

Un volet ou bavette 81 élastique rectangulaire en caoutchouc ou analogue est monté par un côté sur le côté inférieur de la plaque droite 7 du boîtier.

Le volet 81 est tourné vers l'outil monté sur la broche de la toupie et est destiné à contraindre les copeaux de bois éjectés par l'outil dans sa direction à rester à proximité de l'ouverture 14 avant du boîtier 2, pour pouvoir ensuite être aspirés par la buse 13.

La surface extérieure du tube 16 et les ouvertures 17 et 18 sont de formes telles que le tube soit immobilisé en rotation par rapport à son axe dans ces ouvertures.

Il est ainsi évité de devoir avoir recours à un appui du support 70 sur la table 8 pour immobiliser complètement en rotation la lunette par rapport à la machine.

L'espace compris entre le support 70 et la table 8 est donc libre pour la circulation des copeaux.

La surface extérieure du tube 16 et les ouvertures 17 et 18 sont ici de forme polygonale, par exemple rectangulaire ou carrée.

En position d'immobilisation, le protecteur 1 est immobilisé par rapport au boîtier 2 et à la machine d'usinage. Cet état est maintenu par serrage de la vis 65a et de l'écrou 69.

Dans cette position, le support 70 de lunette est parallèle aux directions E et L.

Les surfaces principales 33, 34 et d'appui 35, 36 des moyens de guidage 30 et 31 sont parallèles à la direction E.

En position de coulissement, le protecteur 1 peut être déplacé par l'utilisateur le long de la trajectoire de réglage par rapport au boîtier 2 et à la machine.

Le passage entre l'une et l'autre des positions de libération et d'immobilisation est effectué exclusivement par serrage et desserrage de la vis 65a, et ce par rotation manuelle de la poignée 68, rendant possible respectivement le rapprochement et l'éloignement l'une de l'autre des première et deuxième pièces 56, 57 et donc des surfaces d'appui 35, 36.

Dans la réalisation représentée à la figure 4, un bras 82 de support est fixé de manière amovible à l'aide d'une vis 83 et d'un écrou 84 au coté droit de la plaque 7.

La tête de la vis 83 se trouve à droite de la plaque 7 et du bras 82 et est solidaire d'une quatrième poignée 85.

Le bras 82 a, vu de dessus, un profil trapézoïdales'élargissant vers la droite, vers l'avant et à droite du volet 81.

Une rampe 86 ou butée d'attaque, qui est destinée au guidage de pièces à usiner et qui comporte un trou oblong 87, est fixée de manière amovible au bras 82 par une vis 88, un écrou 89 et une ou plusieurs rondelles 90 enfilées sur la vis 88 d'un côté ou de part et d'autre du bras 82. La vis 88 est montée de manière à traverser un trou prévu dans la partie inférieure du bras 82, à proximité et à droite du volet 81.

La vis 88 est surmontée vers l'avant d'une quatrième poignée 91, solidaire de celle-ci et prenant appui contre la face droite du volet 81.

La rampe 86 de guidage a un profil de trapèze rectangle oblong dirigé vers l'avant et vers la gauche en direction de la lunette 71. Son côté oblique est tourné vers la lunette 71.

Un patin presseur 92, représenté aux figures 2 à 4 est prévu dans le protecteur 1.

Ce patin presseur 92 est relié de manière similaire à la lunette 71 à un deuxième moyen 93 de guidage femelle, sur lequel sont prévus des deuxièmes moyens 94 de sollicitation manuels et des deuxièmes moyens 95 d'immobilisation.

Le deuxième moyen 93 de guidage femelle coopère avec le moyen 30 de guidage mâle.

Les deuxièmes moyens 93 à 95 sont similaires aux moyens 31, 54 et 55 et sont destinés au guidage et à l'immobilisation du patin 92 par rapport au boîtier 2 et à la machine.

La face arrière 96 d'un deuxième support 97 de patin est fixée par l'intermédiaire de trois attaches circulaires 98 à 100 disposées en triangle isocèle pointant vers le bas au deuxième moyen 93 de guidage femelle.

Le support 97 comporte, se raccordant à la face arrière 96, deux faces latérales planes droite et gauche 101 et 102 se raccordant à l'avant à une face en demi-cylindre 103 vertical.

Les faces 101, 102 et 103 se raccordent latéralement à la périphérie à deux ailes horizontales courbes 104 et 105 de forme extérieure similaire à celle de la plaque 72 de la lunette 71.

Le patin presseur 92 est fixé sous les ailes 104, 105 par deux boulons 107 et 108, dont les têtes de vis sont surmontées et solidaires chacune d'une poignée et traverse deux trous oblongs 109 et 110 ménagés dans les ailes 104, 105.

On a représenté sur les figures 5 à 7, un patin 92 selon un autre mode de réalisation.

Sa forme générale est ici similaire à celle du patin 92 visible sur la figure 4.

Par contre, le patin 92 et ses parois ou faces 101, 102 et 103 forme une pièce unitaire.

Ici, cette pièce est une pièce de moulage injection de polycarbonate transparent.

Outre son coût réduit et sa résistance aux contraintes mécaniques, le patin 92 de ce mode de réalisation présente l'avantage d'offrir une visibilité de l'outil.

Dans une réalisation, l'une ou plusieurs des poignées, notamment la poignée 68 comporte un évidement comportant une première partie cylindrique pour le passage du corps de la vis correspondante et une deuxième partie, se raccordant à la première et de forme complémentaire de celle de la tête de la vis de laquelle la poignée est solidaire. Cette vis est à tête non circulaire, par exemple polygonale.

La tête de la vis est logée dans la deuxième partie de l'évidement, ce qui permet une solidarisation simple et peu coûteuse de la poignée à la vis correspondante.

La vis et l'évidement de la poignée sont par exemple à six pans.

Les poignées sont par exemple, vues suivant l'axe de la vis, de forme extérieure générale triangulaire à angles tronqués, les faces des triangles étant concaves pour permettre une meilleure préhension. Les angles du triangle sont par exemple formés par de petites faces convexes, par exemple en forme de cylindre circulaire.

Les poignées, le patin presseur 106, la bavette 81 et la butée d'attaque 86 sont des pièces de moulage en matière synthétique, par exemple en polyester.

## Revendications

1. Dispositif de guidage et d'immobilisation d'un protecteur (1) d'outil de forme tel que de toupie, sur une machine d'usinage, par exemple de bois, comportant au moins une glissière comprenant un seul moyen (30) de guidage mâle et un seul moyen (31) de guidage femelle complémentaire, qui sont montés a coulissement réciproque selon une trajectoire (32) de réglage et sont destinés à être rigidement fixés au protecteur (1) ou à la machine, et des moyens (55) d'immobilisation réciproque des moyens de guidage mâle et femelle (30, 31); le seul moyen (30) de guidage mâle et le moyen (31) de guidage femelle, comportant chacun au moins une surface principale (33, 34) configurée pour empêcher à la fois leur rotation autour de la trajectoire (32) de réglage et leur séparation; caractérisé en ce que les moyens (55) d'immobilisation comportent au moins une surface (36) d'appui, faisant partie du moyen (30, 31) de guidage mâle et/ou femelle, sensiblement en regard des surfaces principales (33, 34), apte à être plaquée par des moyens (54) de sollicitation manuels contre une surface (35) d'appui complémentaire du moyen de guidage femelle et'ou mâle (31, 30) et déplaçable, par rapport à la surface principale (33, 34) de ce moyen de guidage mâle et'ou femelle (30, 31), entre l'une et l'autre de positions d'immobilisation réciproque des moyens (30, 31 )de guidage mâle et femelle et de coulissement réciproque de ceux-ci.

2. Dispositif suivant la revendication 1, caractérisé en ce que la surface (36) d'appui est maintenue avec jeu, en l'absence de placage par les moyens (54) de sollicitation manuels, à distance de la surface (35) d'appui complémentaire de façon à pouvoir participer au coulissement réciproque.

3. Dispositif selon l'une quelconque des revendications 1 ou 2, caractérisé en ce que les surfaces principales et d'appui (33, 34, 35, 36) des moyens de guidage femelle et mâle (31, 30) ont une section, transversalement à la trajectoire (32) de réglage, en queue d'aronde ou analogue.

4. Dispositif selon l'une quelconque des revendications 1 à 3, caractérisé en ce que les surfaces principales et d'appui (33, 34, 35, 36) des organes de guidage femelle et mâle (31, 30) ont une section, transversalement à la trajectoire (32) de réglage de la glissière, de forme polygonale, par exemple avec un nombre impair de côtés du polygone, ou obtenue par extrusion d'un profilé d'aluminium en alliage.

5. Dispositif selon la revendication 4, caractérisé en ce que les surfaces (33, 34, 35, 36) principale et d'appui des moyens (31, 30) de guidage femelle et mâle ont une section en ovale non circulaire, par exemple en ellipse, ou analogue.

6. Dispositif selon l'une quelconque des revendications 1 à 5, caractérisé en ce que la surface (35, 36) d'appui du moyen (30, 31) de guidage mâle et'ou femelle est apte à être plaquée, par les moyens (54) de sollicitation manuels, sur la surface (36, 35) d'appui complémentaire, par guidage selon une trajectoire de placage, qui comprend une rotation de la surface (36, 35) d'appui du moyen (30, 31) de guidage mâle et'ou femelle par rapport à un axe fixe par rapport à la surface principale (33, 34) de ce moyen de guidage mâle et'ou femelle (30, 31).

7. Dispositif selon l'une quelconque des revendications 1 à 5, caractérisé en ce que la surface (35, 36) d'appui du moyen (30, 31) de guidage mâle et/ou femelle est apte à être plaquée, par les moyens (54) de sollicitation manuels, sur la surface (36, 35) d'appui complémentaire, par guidage selon une trajectoire de placage, qui comprend une translation de la surface (36, 35) d'appui du moyen (30, 31) de guidage mâle et/ou femelle par rapport à la surface principale (33, 34) de ce moyen de guidage (30, 31) mâle et'ou femelle.

8. Dispositif selon l'une des revendications 6 et 7, caractérisé en ce que les moyens (30, 31) de guidage mâle et/ou femelle, dont fait partie la surface (35, 36) d'appui, comprennent une première pièce (56) ayant un premier bord (57), le moyen (30, 31) de guidage mâle et/ou femelle comportant la surface principale (34, 35) comprend une deuxième pièce (58) ayant un profil (59) coudé destiné à recevoir le bord (57), les moyens (54) de sollicitation étant aptes à appliquer le bord (57) contre l'intérieur du profil (59) coudé pour guider en rotation la surface (36) d'appui autour du bord (57), lors du passage entre l'une et l'autre des positions de coulissement et d'immobilisation.

9. Dispositif selon la revendication 8, caractérisé en ce que le profil (59) coudé comporte une branche (65) destinée au guidage du bord (57) de la première pièce (56) en translation le long de celle-ci.

10. Dispositif selon l'une des revendications 8 et 9, caractérisé en ce que les moyens (54) de sollicitation manuels sont montés sur les première et deuxième pièces (56, 58), la première pièce (56) comprend par exemple une plaque (48) ayant un profil en zigzag ou en U, dont une première branche (61) centrale porte les moyens (54) de sollicitation manuels, dont une deuxième branche (62), adjacente à la première (61), porte la surface (36) d'appui, et dont une troisième branche (63), adjacente à la première (61) et éloignée de la deuxième (62), porte le premier bord (57), la deuxième pièce (58) comprend par exemple une plaque (47) ayant le profil (59) coudé, comportant une quatrième branche (64) sensiblement en vis-à-vis de la première (61) et une cinquième branche (65), sensiblement en vis-à-vis de la troisième (63).

11. Dispositif selon la revendications 10, caractérisé en ce que les moyens de sollicitation manuels (54) comprennent une vis (65a) de serrage l'une contre l'autre des première et deuxième pièces (56, 58), qui traverse celles-ci en leurs première et quatrième branches (61, 64) et est solidaire d'une poignée (68) ou analogues.

12. Dispositif selon l'une quelconque des revendications 1 à 11, caractérisé en ce que la glissière comprend des tôles métalliques pliées, par exemple la glissière est réalisée exclusivement avec de telles tôles, notamment les moyens de guidage mâle et'ou femelle (30, 31) et les première et/ou deuxième pièces (56, 58).

13. Ensemble destiné à une machine d'usinage, par exemple de pièces de bois, et équipée d'un dispositif d'immobilisation selon l'une quelconque des revendications 1 à 12.

14. Ensemble selon la revendication 13, caractérisé en ce qu'il comprend un boîtier (2), par exemple parallélépipédique, fixé d'une part au moyen (30, 31) de guidage mâle ou femelle, destiné à être fixé d'autre part sur la machine d'usinage, comportant une buse (13) d'aspiration des copeaux éjectés par la machine lors de l'usinage, et, par exemple, des tôles métalliques.

15. Ensemble selon la revendication 14, caractérisé en ce qu'il comprend une rampe (86) de guidage de la pièce à usiner par la machine, pouvant être fixée au boîtier (2).

16. Ensemble selon la revendication 15, caractérisé en ce qu'il comprend un volet (81) élastique en caoutchouc ou analogue, monté par un côté sur le boîtier (2), tourné vers l'outil d'usinage tel que de toupie et apte à être appliqué par un autre côté contre la rampe (86) et/ou contre des moyens de fixation de celle-ci au boîtier (2).

17. Ensemble selon l'une quelconque des revendications 14 à 16, caractérisé en ce que la trajectoire (32) de réglage comprend une portion rectiligne et le boîtier (2) comprend un axe de réglage en rotation du protecteur (1), se trouvant dans un plan sensiblement perpendicaire à la direction de cette portion rectiligne et pouvant être bloqué en rotation par rapport à la machine.

18. Ensemble selon les revendications 14 et 17, caractérisé en ce que l'axe de réglage en rotation comprend un tube (16), monté sur le boîtier (2) et apte à être immobilisé par rapport à celui-ci par des moyens de blocage, par exemple par une vis (28) appuyant transversalement sur lui et'ou par traversée d'une ou de plusieurs ouvertures (17, 18) du boîtier (2), la surface extérieure du tube (16) et les ouvertures (17, 18) étant de formes telles que le tube (16) soit immobilisé en rotation par rapport à son axe dans ces ouvertures.

19. Ensemble selon l'une quelconque des revendications 13 à 18, caractérisé en ce qu'il comprend un protecteur (1) de toupie comportant une lunette (71) fixée au moyen (31, 30) de guidage femelle ou mâle, la lunette (71), par exemple, comportant une tôle métallique plane à ouverture (73a) oblongue et étant fixée par l'intermédiaire d'une ou de plusieurs cornières (74).

20. Machine d'usinage, par exemple de pièces de bois, équipée d'un dispositif d'immobilisation selon l'une quelconque des revendications 1 à 12 et'ou équipée d'un ensemble selon l'une quelconque des revendications 13 à 19.
